(19) **Europäisches Patentamt**
**European Patent Office**
**Office européen des brevets**

(11) **EP 2 429 135 A1**

(12) **EUROPEAN PATENT APPLICATION**
published in accordance with Art. 153(4) EPC

(43) Date of publication:
**14.03.2012 Bulletin 2012/11**

(51) Int Cl.:
***H04L 12/56*** *(2006.01)*

(21) Application number: **10771973.4**

(22) Date of filing: **04.03.2010**

(86) International application number:
**PCT/CN2010/070860**

(87) International publication number:
**WO 2010/127570 (11.11.2010 Gazette 2010/45)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **08.05.2009 CN 200910138582**

(71) Applicant: **Huawei Technologies Co., Ltd.**
**Shenzhen, Guangdong 518129 (CN)**

(72) Inventor: **XUE, Li**
**Shenzhen**
**Guangdong 518129 (CN)**

(74) Representative: **Barth, Stephan Manuel**
**Isarpatent**
**Postfach 44 01 51**
**80750 München (DE)**

(54) **METHOD, DEVICE AND SYSTEM FOR ESTABLISHING BIDIRECTIONAL POINT-TO-MULTIPOINT LABEL SWITCHED PATH**

(57) The present invention provides a method, an apparatus, and a system for setting up a bidirectional point-to-multipoint label switched path. The method includes: distributing a leaf node label of a leaf-to-source data path and a source node label of a source-to-leaf data path through a Path message and a Resource Reservation message by using a Resource Reservation Protocol-Traffic Engineering to set up a bidirectional point-to-multipoint label switched path. The bidirectional point-to-multipoint label switched path that is set up in the present invention ensures consistency of LSPs in both directions, and overcomes a defect that the source node needs to send multiple data packets to the leaf nodes through multiple bidirectional point-to-multipoint label switched paths when a source transmits data to a leaf in the prior art.

FIG. 2

**Description**

This application claims priority to Chinese Patent Application No. 200910138582.9, filed with the Chinese Patent Office on May 8, 2009 and entitled "METHOD, APPARATUS, AND SYSTEM FOR SETTING UP BIDIRECTIONAL POINT-TO-MULTIPOINT LABEL SWITCHED PATH", which is incorporated herein by reference in its entirety.

**FIELD OF THE INVENTION**

The present invention relates to point-to-multipoint technologies, and in particular, to a method, an apparatus, and a system for setting up a bidirectional point-to-multipoint (P2MP) label switched path (LSP).

**BACKGROUND OF THE INVENTION**

In an existing Layer 2 Virtual Private Network (L2VPN), multiple service types, such as a virtual private wire service (VPWS) and a virtual private LAN service (VPLS), are defined. The VPWS provides a point-to-point (P2P) L2VPN service, and the VPLS is used to emulate a Local Area Network (LAN) service of the Ethernet. Both the VPWS and the VPLS may provide a simple P2MP service, but a related process is complicated. Setting up of paths to each receive-end leaf node needs to be completed through a source-end node, and a source-end device needs to send multiple copies of data to each receive end, which imposes a great pressure on the source-end device in one aspect and causes a serious waste of network resources in another aspect.

As new service architecture of the L2VPN, a virtual private multicast service (VPMS) provides a P2MP transmission path and meets a P2MP transmission requirement. The VPMS completes traffic emulation of the P2MP service through a P2MP Pseudo-Wire (PW) that is set up on a P2MP Packet Switched Network (PSN) tunnel. A linchpin of the P2MP PW is to set up a P2MP LSP. In the prior art, a P2MP LSP may be set up by extending a Resource Reservation Protocol-Traffic Engineering (RSVP-TE) or a Label Distribution Protocol (LDP). An existing P2MP LSP is unidirectional. That is to say, the P2MP LSP is a source-to-leaf (S2L) LSP tree.

In some application scenarios, a reverse path is required to provide reverse traffic. For example, a transmit end sometimes expects to receive traffic such as a LoopBack (LB) packet from the receive end as feedback information of a control plane.

In an existing VPMS application, setting up of a reverse path may be completed by setting up two independent VPMS application instances, but this method cannot properly meet an application requirement. This is because in most application scenarios, for example, in a process of sending an LB packet, it is expected that data in two directions passes through a same PSN physical path. If the VPMS application instances of the two directions are independent of each other, it is difficult to ensure that physical paths in the two directions are consistent. Consequently, S2L traffic and leaf-to-source (L2S) traffic pass through different network devices, which leads to inaccuracy of fault detection or another management problem. For an application scenario where a feedback path is required, multiple bidirectional P2P LSPs may be set up and these bidirectional P2P LSPs are combined to form a bidirectional P2MP LSP. With the bidirectional P2MP LSP that is set up through this method and meets a bidirectional traffic requirement, when a source transmits data to a leaf, the source end needs to send multiple data packets through multiple bidirectional P2P LSPs, and it is impossible to ensure efficient use of the PSN.

**SUMMARY OF THE INVENTION**

An embodiment of the present invention provides a method for setting up a bidirectional P2MP LSP, including:

distributing a leaf node label of an L2S data path and a source node label of an S2L data path through a Path message and a Resource Reservation (Resv) message by using RSVP-TE to set up a bidirectional P2MP LSP.

An embodiment of the present invention provides a router. The router serves as a source node of a bidirectional P2MP LSP, and includes:

a sending unit, configured to send a Path message to each leaf node, where the Path message carries an indication of setting up the bidirectional P2MP LSP and a label that is distributed to the leaf node; and a receiving unit, configured to receive a Resv message from each leaf node, where the Resv message carries a label distributed to the source node; or

a sending unit, configured to send a Path message to each leaf node, where the Path message carries an indication of setting up a bidirectional P2MP LSP; and a receiving unit, configured to receive a Resv message from each leaf node, where the Resv message carries a label distributed to the source node, and a label distributed to the leaf node itself or a leaf node label request;
where, when the Resv message carries the leaf node label request, the sending unit is further configured to send a Resv message that carries a leaf node label to the leaf node.

Accordingly, an embodiment of the present invention provides another router. The router serves as a leaf node of a bidirectional P2MP LSP, and includes:

a receiving unit, configured to receive a Path message from a source node, where the Path message carries an indication of setting up a bidirectional P2MP LSP and a label that is distributed to the leaf node; and a sending unit, configured to send a Resv message to the source node, where the Resv message carries a label distributed to the source node; or
a receiving unit, configured to receive a Path message from a source node, where the Path message carries an indication of setting up a bidirectional P2MP LSP; and a sending unit, configured to send a Resv message to the source node, where the Resv message carries a label distributed to the source node, and a label distributed to the leaf node itself or a leaf node label request;
where, when the Resv message carries the leaf node label request, the receiving unit is further configured to receive from the source node a Resv message that carries a leaf node label.

An embodiment of the present invention provides a system for setting up a bidirectional P2MP LSP, including: a source node router and multiple leaf node routers;
the source node router is configured to: send a Path message to each leaf node router, and receive a Resv message from each leaf node router, where the Path message carries an indication of setting up a bidirectional P2MP LSP and a label that is distributed to a leaf node, and the Resv message carries a label distributed to the source node; and
the leaf node router is configured to: receive the Path message from the source node router, and send the Resv message to the source node, where the Path message carries the indication of setting up a bidirectional P2MP LSP and the label that is distributed to the leaf node, and the Resv message carries the label distributed to the source node; or
the source node router is configured to: send a Path message to each leaf node router, and receive a Resv message from each leaf node router, where the Path message carries an indication of setting up a bidirectional P2MP LSP, and the Resv message carries a label distributed to the source node, and a label distributed to a leaf node itself or a leaf node label request; when the Resv message carries the leaf node label request, the source node router is further configured to send a Path message that carries a leaf node label to the leaf node router; and
the leaf node router is configured to: receive the Path message from the source node router, and send the Resv message to the source node, where the Path message carries the indication of setting up a bidirectional P2MP LSP, and the Resv message carries the label distributed to the source node, and the label distributed to the leaf node or the leaf node label request; when the Resv message carries the leaf node label request, the leaf node router is further configured to receive from the source node router a Resv message that carries the leaf node label.
The bidirectional P2MP LSP that is set up in this embodiment ensures consistency of LSPs in both directions, and overcomes a defect that in the prior art the source end needs to send multiple data packets through multiple bidirectional P2P LSPs when the source transmits data to the leaf.

## BRIEF DESCRIPTION OF THE DRAWINGS

To describe the technical solutions of the present invention more clearly, the following briefly describes the accompanying drawings required in description of the embodiments of the present invention. Apparently, the accompanying drawings to be described are only some embodiments of the present invention, and persons of ordinary skill in the art may derive other drawings based on these accompanying drawings without any creative effort.

FIG. 1 is a schematic diagram of a bidirectional P2MP LSP according to an embodiment of the present invention;
FIG. 2 is a flowchart of setting up a bidirectional P2MP LSP according to a first embodiment of the present invention;
FIG. 3 is a flowchart of setting up a bidirectional P2MP LSP according to a second embodiment of the present invention;
FIG. 4 is a flowchart of setting up a bidirectional P2MP LSP according to a third embodiment of the present invention;
FIG. 5 is a schematic structural diagram of a source node router according to a fourth embodiment of the present invention; and
FIG. 6 is a schematic structural diagram of a leaf node router according to the fourth embodiment of the present invention.

**DETAILED DESCRIPTION OF THE EMBODIMENTS**

The technical solutions in the embodiments of the present invention are clearly and completely described below with reference to the accompanying drawings in the embodiments of the present invention. Evidently, the embodiments are exemplary and not exhaustive. All other embodiments, which can be derived by those skilled in the art from the embodiments given herein without any creative effort, shall fall within the protection scope of the present invention.

In the embodiments of the present invention, a bidirectional P2MP LSP in a PSN is set up to meet an application requirement. The bidirectional P2MP LSP refers to the following: A source node is connected to each leaf node through a unidirectional P2MP LSP, and each leaf node is connected to the source node through a reverse path L2S P2P LSP that is consistent with a sub-LSP of an S2L P2MP LSP respectively. If M leaf nodes exist, a composition formula of a bidirectional P2MP LSP is expressed as:

$$\text{Bidirectional P2MP LSP} = \text{S2L P2MP LSP} + \text{M*L2S P2P LSP}.$$

In this formula, S2L indicates a direction from a source to a leaf, and L2S indicates a direction from a leaf to the source; one S2L P2MP LSP is composed of multiple S2L sub-LSPs, and each S2L sub-LSP indicates a P2P LSP from the source node to a leaf node.

In the embodiments of the present invention, the source node, for example, a source Provider Edge (PE), is indicated as an S-PE; and the leaf node, for example, a leaf PE, is indicated as an L-PE.

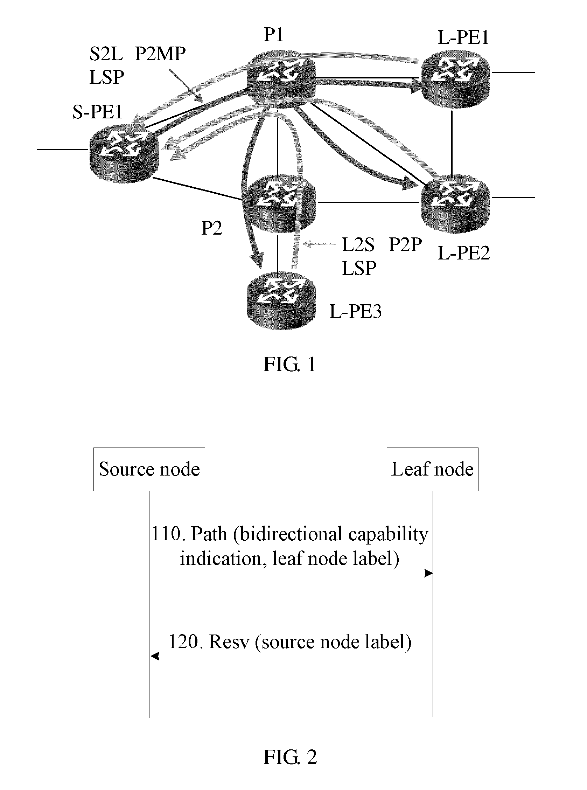

FIG. 1 provides an example of a bidirectional P2MP LSP. In this P2MP LSP example, one source node is S-PE 1, three leaf nodes L-PE 1, L-PE 2, and L-PE 3, and two intermediate nodes P 1 and P 2 exist.

In this P2MP LSP example, as a link cost between S-PE 1 and P 2 is high, the bidirectional P2MP LSP shown in FIG. 1 is formed. The bidirectional P2MP LSP is composed of one S2L P2MP LSP and three L2S P2P LSPs. The S2L sub-LSP from S-PE 1 to each leaf PE is consistent with a physical path of an L2S P2P LSP from each leaf PE to S-PE 1. Moreover, no communication is performed among the leaf nodes L-PE 1, L-PE 2, and L-PE 3.

The preceding definition provides a basic concept of the bidirectional P2MP LSP. In the embodiments of the present invention, on the basis of the definition, RSVP-TE is extended and the extended RSVP-TE is used to transmit dynamic signaling of the bidirectional P2MP LSP to complete operations such as setting up, tearing down, and maintenance of the bidirectional P2MP LSP.

To be compatible with an existing mechanism, in the embodiments of the present invention, RSVP-TE is extended based on RFC 4875 to define a new object or extend an existing object for operations such as setting up of bidirectional P2MP LSP and subsequent path tearing down and maintenance. A definition of a new object complies with an Internet Engineering Task Force (IETF) Internet Assigned Numbers Authority (IANA) standard.

Object defining or extending in the embodiments of the present invention is as follows:

(1) A new Directional_Ability object is defined, where the Directional_Ability object carries capability information about whether the bidirectional P2MP LSP is supported. The capability of supporting the bidirectional P2MP LSP may serve as an indication of setting up the bidirectional P2MP LSP, that is, used to indicate that the bidirectional P2MP LSP needs to be set up.

A class of the Directional_Ability object belongs to a session, and a reserved value is selected as a type of the Directional_Ability object.

Table 1 shows a format of the Directional_Ability object:

**Table 1**

| Flags | Optional direction |
|-------|--------------------|

The Flags are 8 bits, and a value of the Flags may be set to all 0s, that is, a reserved value, in the embodiments of the present invention. The Optional directional is set to 1 to indicate the bidirectional P2MP LSP or set to 0 to indicate a unidirectional P2MP LSP. Alternatively, the Optional directional is set to 1 to indicate a unidirectional P2MP LSP or set to 0 to indicate a bidirectional P2MP LSP.

(2) A new L2S_SUB_LSP_Label object is defined. The class and the type of this object comply with the IANA standard, and a non-conflicting reserved value is selected. This L2S_SUB_LSP_Label includes an Internet Protocol (IP) address of a leaf node of the P2MP LSP, and a label distributed by the source node to the leaf node.

In the embodiments of the present invention, modes for distributing a leaf node label that corresponds to the L2S_SUB_LSP_Label object include an upstream label distribution mode and a downstream label distribution mode. The downstream label distribution mode further includes active downstream distribution, downstream distribution to an upstream as requested, and so on.

Labels distributed by the source to leaves may be the same or different, depending on whether the source end needs to identify a leaf from which traffic comes. For example:

I. In the downstream label distribution mode, if the source end needs to identify the leaf which sends the traffic, the source end needs to distribute different labels to different leaves when the source end distributes a label to each leaf. In this way, it is ensured that the source end may distinguish transmit-end information of the traffic through labels.
II. In the downstream label distribution mode, if the source end needs to identify the leaf which sends the traffic, the source end may distribute a same label to different leaves when the source end distributes a label to each leaf. In this case, an IP address of a leaf needs to be carried when a leaf node sends traffic to the source end. The source end distinguishes the transmit-end information of the traffic through IP addresses and the label.
III. In the downstream label distribution mode, if the source end does not need to identify the leaf which sends the traffic, labels distributed by the source end to each leaf may be the same or different without a special restriction.

In addition, in the upstream label distribution mode, the source may directly distribute a source node label of an S2L data path to a leaf. The label values may be the same or different.

In the embodiments of the present invention, taking the downstream label distribution mode as an example, one or multiple L2S_SUB_LSP_Label objects may form a new L2S_SUB_LSP_Label list, which may be carried in an original object of RSVP-TE, for example, carried in a Label_Set or another object.

The L2S_SUB_LSP_Label object may include one or multiple combinations of objects which have an IPv4/IPv6 address and a corresponding label. The labels distributed by the source node to each leaf node may be the same or different.

An object which has an IPv4 address and a corresponding label may include a format shown in Table 2. An object which has an IPv6 address and a corresponding label may include a format shown in Table 3.

**Table 2**

| IPv4 ADD of leaf A (4 octets) |
| --- |
| Label for leaf A to source (1 octet) |
| IPv4 ADD of leaf B (4 octets) |
| Label for leaf B to source (1 octet) |
| ... |
| ... |

**Table 3**

| IPv6 ADD of leaf A (16 octets) |
| --- |
| Label for leaf A to source (1 octet) |
| IPv6 ADD of leaf B (16 octets) |
| Label for leaf B to source (1 octet) |
| ... |
| ... |

In the embodiments of the present invention, by using the preceding defined objects, that is, by using RSVP-TE, a leaf node label of an L2S data path and a source node label of an S2L data path are distributed through a Path message and a Resv message, so as to set up a bidirectional P2MP LSP.

The following gives specific embodiments of setting up a bidirectional P2MP LSP.

Embodiment 1

This embodiment provides a method for setting up, tearing down, and maintaining a bidirectional P2MP LSP. In this embodiment, a source node distributes a label to a leaf node through a Path message, that is, distributes an S2L leaf node label. The leaf node distributes a label to the source node through a Resv message, that is, distributes an L2S source node label. Both a distribution mode of the L2S source node label and that of the S2L leaf node are a downstream label distribution mode. As shown in FIG. 2, the setting up method includes the following steps:

Step 110: The source node sends a Path message to the leaf node, where the Path message carries an indication of setting up a bidirectional P2MP LSP and a label that is distributed to the leaf node.

The label distributed to the leaf node is used when the leaf sends data to the source, and is carried in the data packet sent to the source node.

Before this step, it is required to determine a source node and a leaf node that belong to a same P2MP LSP. For example, an automatic discovery mechanism such as a Border Gateway Protocol (BGP) may be used to perform dynamic discovering of the source node and the leaf node that belong to the same P2MP LSP; or, a static configuration mechanism may be used to complete configuration of the source node and the leaf node that belong to the same P2MP LSP.

According to a requirement of a network management system or a requirement of a device, the source node may generate and send one or multiple Path messages for setting up the bidirectional P2MP LSP. The Path messages for setting up a same P2MP LSP include a same session object and share network resources. The number of the Path messages depends on the number of the leaf nodes. When too many leaf nodes exist and the length of a Path message is not sufficient for carrying all object values, relevant messages are carried through multiple Path messages. A format of a Path message may be as follows:

```
<Path Message> ::= <Common Header> [<INTEGRITY>]
                        [ [<MESSAGE_ID_ACK> I
                  <MESSAGE_ID_NACK>] ...]
                        [<MESSAGE_ID>]
                        <SESSION> <RSVP_HOP>
                        <TIME_VALUES>
                        [<EXPLICIT_ROUTE>]
                        <LABEL_REQUEST>
                        [<PROTECTION>]
                        [<LABEL_SET>...]
                        [<SESSION_ATTRIBUTE>]
                        [<NOTIFY_REQUEST>]
                        [<ADMIN_STATUS>]
                        [<POLICY_DATA>...]
                        <sender descriptor>
                        [<S2L sub-LSP descriptor list>]
                        [L2S sub_LSP_LABEL list]
        [<Directional_Ability>]
        [<>]
```

This format includes multiple objects that may be carried in the Path message when the Path message is formed. In a practical requirement, when the Path message is formed, part of or all of the foregoing objects may be carried.

In this embodiment, a Directional_Ability object and an L2S_SUB_LSP_LABEL list are added in the Path message format. The Directional_Ability object may carry the indication of setting up the bidirectional P2MP LSP, that is, support the bidirectional P2MP LSP. The L2S SUB_LSP_LABEL list may include one or multiple L2S_SUB_LSP_ LABEL objects.

If an intermediate node exists on the bidirectional P2MP LSP, after receiving the Path message, the intermediate node knows a need of setting up the bidirectional P2MP LSP according to the indication of setting up the bidirectional P2MP LSP, reserves the label that is distributed to the leaf node and carried in the Path message and a corresponding leaf node IP address in a local database, and forwards the Path message to a downstream leaf node.

Before forwarding the Path message to the downstream leaf node, the intermediate node may modify each label in the L2S_SUB_LSP_LABEL list according to a local policy.

After receiving the Path message, the leaf node reads the label distributed by the source node to the leaf node. If the leaf node label in the Path message is modified by the intermediate node, the leaf node reads the leaf node label modified by the intermediate node.

Step 120: The leaf node sends a Resv message to the source node, where the Resv message carries a label distributed to the source node.

The label distributed to the source node is used when the source sends data to the leaf, and is carried in the data packet sent to the leaf node.

The Resv message may further carry a Directional_ability object to negotiate a capability of supporting the bidirectional P2MP LSP with the source node.

In the process of sending the Resv message, a resource reservation format is Fixed Filter (FF) or Shared Explicit (SE). A mode of performing resource reservation by using the FF or the SE is consistent with RFC 4875.

After receiving the Resv message, the source node reads the label distributed by the leaf node to the source node.

Through the foregoing steps, a distribution process of labels of a P2MP LSP in both directions, that is, a distribution process of the label distributed by the source node to the leaf node and the label distributed by the leaf node to the source node, is completed. In this way, the bidirectional P2MP LSP is set up.

The bidirectional P2MP LSP that is set up in this embodiment ensures consistency of LSPs in both directions, and the P2MP LSP may be used to send a data packet to each leaf node, which overcomes a defect that the source end needs to send multiple data packets through multiple bidirectional P2P LSPs when the source transmits data to the leaf in the prior art.

The forgoing process provides steps of setting up a bidirectional P2MP LSP based on extended RSVP-TE. Further, this embodiment further provides a process of tearing down a bidirectional P2MP LSP based on the extended RSVP-TE. A teardown mechanism may tear down the bidirectional P2MP LSP by initiating a message from the source node or from the leaf node, according to a performance requirement or a network management system requirement of the P2MP LSP. The teardown process may include:

sending a Pathtear message from one end of the bidirectional P2MP LSP to the other end, and at a transmit end and a receive end of the Pathtear message, deleting all or part of the labels distributed by the two ends respectively.

For example:

(1) When a leaf node needs to be deleted from the bidirectional P2MP LSP, the leaf node sends a Pathtear message to the source node, and deletes a label distributed by the leaf node to the source node.

If the previous Path message carries an INTEGRITY object, the source node deletes leaf node labels of all sub-LSPs with a same session object after receiving the Pathtear message. In this way, tearing down of the whole bidirectional P2MP LSP is completed. This teardown mode is an explicit teardown mode.

If the previous Path message carries no INTEGRITY object, after receiving the Pathtear message, the source node deletes the label distributed to the leaf node that sends the Pathtear message. In this way, tearing down of part of leaves in the bidirectional P2MP LSP, that is, part of sub-LSPs, is completed. In this case, the Pathtear message further includes the IP address of the leaf node itself, and the label distributed to the source node. The IP address of the leaf node itself and the label distributed to the source node are carried in the L2S_SUB_LSP_LABEL list and an S2L SUB_LSP descriptor list respectively. This teardown mode is an implicit teardown mode.

The leaf node may also judge whether the previous Path message carries the INTEGRITY object. When the leaf node needs to be deleted from the bidirectional P2MP LSP, if the leaf node determines that the previous received Path message carries the INTEGRITY object, the Pathtear message sent to the source node may carry an INTEGRITY object indication. The source node may delete labels of all leaf nodes on the bidirectional path according to the indication; in this way, tearing down of the whole bidirectional P2MP LSP is completed. If the Pathtear message sent by the leaf node to the source node carries no INTEGRITY object, after receiving this message, the source node may delete only the label distributed to this leaf node.

(2) When the source node needs to delete a sub-path from the bidirectional P2MP LSP, the source node may send a Pathtear message to a leaf node. If the previous Path message carries the INTEGRITY object, the source node deletes the leaf node labels of all sub-LSPs with the same session object. If the previous Path message carries no INTEGRITY object, the source node deletes only a label of a leaf node that corresponds to an IP address included in the L2S_SUB_LSP_LABEL object of the Pathtear message after sending the Pathtear message.

After receiving the Pathtear message, the leaf node deletes the label distributed to the source node. In this way, tearing down of the bidirectional P2MP LSP is completed.

This embodiment further provides an error notification function of a bidirectional P2MP LSP. After the bidirectional P2MP LSP is introduced, a new error state will occur. The present invention extends error notification information based on RSVP-TE. For example:

A new error code is defined to indicate "unsupported bidirectional P2MP LSP". A value of this error complies with the IANA standard for selecting a reserved value.

For example, when the leaf node receives from the source node the Path message that carries the indication of setting up the bidirectional P2MP LSP, if the leaf node does not support a bidirectional capability, an error notification message is sent to the source node. The error notification message may carry an "unsupported bidirectional P2MP LSP" error code.

In this embodiment, another special error notification value that is used for the bidirectional P2MP LSP may further be defined. A value of the special error notification value complies with the IANA standard for selecting a reserved value.

The bidirectional P2MP LSP that is set up in this embodiment ensures consistency of LSPs in both directions, and the P2MP LSP may be used to send a data packet to each leaf node, which overcomes a defect that the source end needs to send multiple data packets through multiple bidirectional P2P LSPs when the source transmits data to the leaf in the prior art.

**Embodiment 2**

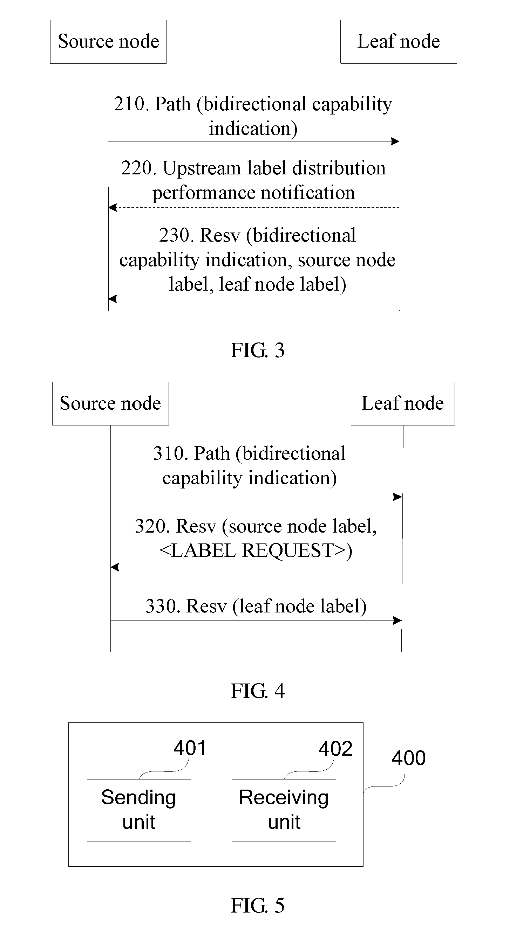

This embodiment provides a method for setting up, tearing down, and maintaining a bidirectional P2MP LSP. In this embodiment, a source node initiates a request for setting up the bidirectional P2MP LSP, and a leaf node completes distribution of a leaf node label in an S2L direction and a source node label in an L2S direction with reference to an upstream label distribution mode and a downstream label distribution mode. As shown in FIG. 3, the setting up method includes the following steps:

Step 210: The source node sends a Path message to the leaf node, where the Path message carries an indication of setting up the bidirectional P2MP LSP, that is, information about a capability of supporting the bidirectional P2MP LSP.

Before this step, it is required to determine a source node and a leaf node that belong to a same P2MP LSP. For example, through an automatic discovery mechanism, the source node and the leaf node that belong to the same P2MP LSP may be discovered. This operation may also be performed through static configuration.

According to a requirement of a network management system or a requirement of a device, the source node may generate and send one or more Path messages for setting up the bidirectional P2MP LSP, and the Path messages for setting up a same P2MP LSP include a same session object and share network resources.

The indication of setting up the bidirectional P2MP LSP is carried in a Directional_Ability object.

If an intermediate node exists, after receiving the Path message, the intermediate node knows a need of setting up the bidirectional P2MP LSP according to the indication of setting up the bidirectional P2MP LSP, and forwards the Path message to a downstream leaf node.

Step 220: Each leaf node performs upstream label distribution performance notification to the source node respectively.

The upstream label distribution performance notification is used to notify the source node that all leaf nodes support upstream label distribution performance, so as to request the source node to distribute a label to a leaf node.

Step 230: The leaf node sends a Resv message to the source node, where the Resv message carries a label distributed to the source node and the label distributed to the leaf node itself.

The label distributed to the source node may be carried in an S2L sub-LSP descriptor list, and the label distributed to the leaf node may be carried in an L2S_SUB_LSP_LABEL list.

The Resv message may further carry a Directional_ability object. The Directional_ability object carries a capability of setting up the bidirectional P2MP LSP so that the capability of supporting the bidirectional P2MP LSP is negotiated with the source node.

In the process of sending the Resv message, a resource reservation format uses an FF form. A mode of performing resource reservation by using the FF is consistent with RFC 4875 and is not described here.

This step performs negotiation on the capability of supporting the bidirectional P2MP LSP, and completes distribution of the label of the source node and that of the leaf node.

After receiving the Resv message, the source node reads the label distributed by the leaf node to the source node.

The foregoing steps complete a process of distributing labels of a P2MP LSP in both directions. In this way, setting up of the bidirectional P2MP LSP is completed.

The extended RSVP-TE protocol in this embodiment is further configured to tear down a bidirectional P2MP LSP. The process of tearing down the bidirectional P2MP LSP may be the same as that in the first embodiment, that is, includes the following step:

sending a Pathtear message from one end of the bidirectional P2MP LSP to the other end, and at a transmit end and a receive end of the Pathtear message, deleting all or part of the labels distributed by the two ends respectively.

Both the source node label and the leaf node label in this embodiment are distributed by the leaf node. Therefore, when a leaf node needs to delete a sub-LSP in the bidirectional P2MP LSP, the leaf node sends a Pathtear message to the source node. If the previous Path message carries an INTEGRITY object, the leaf node further deletes the leaf node labels and source node labels of all sub-LSPs with the same session object. If the previous Path message carries no INTEGRITY object, the leaf node deletes only a label of a leaf node that corresponds to an IP address included in an L2S_SUB_LSP_LABEL object of the Pathtear message and a corresponding source node label after sending the Pathtear message.

When the source node needs to delete a sub-LSP in the bidirectional P2MP LSP, the source node may send a Pathtear message to the leaf node. After receiving the Pathtear message, the leaf node deletes the label distributed by the leaf node to the leaf node itself, and the label distributed by the leaf node to the source node.

The extended RSVP-TE in this embodiment is further configured to complete error state notification of the bidirectional P2MP LSP. An operation of performing the error state notification is the same as that in the first embodiment.

The bidirectional P2MP LSP that is set up in this embodiment ensures consistency of LSPs in both directions, and the P2MP LSP may be used to send a data packet to each leaf node, which overcomes a defect that the source end needs to send multiple data packets through multiple bidirectional P2P LSPs when the source transmits data to the leaf in the prior art.

### Embodiment 3

This embodiment of the present invention provides a method for setting up a bidirectional P2MP LSP. In this embodiment, a source node initiates a request for setting up a bidirectional P2MP LSP, and a leaf node feeds back to the source node a label that is distributed to the source node, and the feedback information carries a leaf label distribution request. The source node distributes a label to the leaf node after receiving the request. In this embodiment, both a mode of distributing the source node label and that of distributing the leaf node label are a downstream label distribution mode. As shown in FIG. 4, the method includes the following steps:

Step 310: The source node sends a Path message to the leaf node, where the Path message carries an indication of setting up a bidirectional P2MP LSP.

According to a requirement of a network management system or a requirement of a device, the source node generates and sends one or multiple Path messages. The one or multiple Path messages include a same session object and share network resources.

Step 320: The leaf node receives the Path message, and feeds back a Resv message to the source node, where the Resv message includes a label distributed by each leaf node to the source node, and a leaf label request <LABEL_REQUEST>.

The Resv message may further carry a Directional_ability object so that a capability of supporting the bidirectional P2MP LSP is negotiated with the source node.

If an intermediate node exists, the intermediate node receives the Path message from the source node, knows a need of setting up the bidirectional P2MP LSP, and forwards the Path message to a downstream node.

In the process of sending the Resv message, a resource reservation format uses an FF form. A mode of performing resource reservation by using the FF is consistent with RFC 4875 and is not described here.

Step 330: The source node sends to the leaf node a Resv message that carries a label distributed to each leaf node.

After receiving the Resv message from the leaf node, the source node reads the label distributed by the leaf node to the source node, and reads the <LABEL_REQUEST>. The source node generates a Resv message that carries a label distributed to each leaf node. The label distributed to the leaf node may be carried in an L2S_SUB_LSP_LABEL list.

The leaf node receives the label distributed by the source node, and completes a label distribution process of the P2MP LSP in both directions. As a result, a bidirectional P2MP LSP is set up.

The extended RSVP-TE in this embodiment is further configured to tear down a bidirectional P2MP LSP. The process of tearing down a bidirectional P2MP LSP is the same as that in the first embodiment.

The extended RSVP-TE in this embodiment is further configured to complete error state notification of the bidirectional P2MP LSP. An operation of performing the error state notification is the same as that in the first embodiment.

The bidirectional P2MP LSP that is set up in this embodiment ensures consistency of LSPs in both directions, and the P2MP LSP may be used to send a data packet to each leaf node, which overcomes a defect that the source end needs to send multiple data packets through multiple bidirectional P2P LSPs when the source transmits data to the leaf in the prior art.

The foregoing embodiments provide only several exemplary methods for setting up, tearing down, and maintaining a bidirectional P2MP LSP. However, the present invention is not limited thereto. In addition to the forgoing example description, other label distribution modes are also practicable. For example, the source node may distribute a source node label of the S2L data path in the upstream label distribution mode, and the leaf node may distribute a leaf node label of the L2S data path in the upstream label distribution mode; for example, the source node may also distribute data path labels in the S2L direction and the L2S direction in the upstream label distribution mode and the downstream label distribution mode. To sum up, in the embodiments of the present invention, a bidirectional P2MP LSP may be set up by using the source upstream label distribution mode/downstream label distribution mode, and the leaf upstream label distribution mode/downstream label distribution mode. These embodiment methods are all covered in the protection scope of the present invention.

Persons of ordinary skill in the art may understand that all or part of the steps of the methods in the forgoing embodiments may be implemented by a program instructing relevant hardware. The program may be stored in a computer readable storage medium such as a Read Only Memory or Random Access Memory (ROM/RAM), a magnetic disk, or a Compact Disk-Read Only Memory (CD-ROM).

**Embodiment 4**

This embodiment provides a router. This router serves as a source node of a bidirectional P2MP LSP. As shown in FIG. 5, the router 400 includes a sending unit 401 and a receiving unit 402, where:

the sending unit 401 is configured to send a Path message to each leaf node, where the Path message carries an indication of setting up a bidirectional P2MP LSP and a label that is distributed to the leaf node; and the receiving unit 402 is configured to receive a Resv message from each leaf node, where the Resv message carries a label distributed to the source node; or

the sending unit 401 is configured to send a Path message to each leaf node, where the Path message carries an indication of setting up a bidirectional P2MP LSP; and the receiving unit 402 is configured to receive a Resv message from each leaf node, where the Resv message carries a label distributed to the source node, and a label distributed to the leaf node itself or a leaf label request; and

when the Resv message carries the leaf label request, the sending unit 401 is further configured to send a Path message that carries a leaf node label to the leaf node.

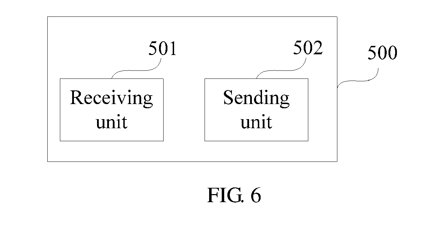

Accordingly, this embodiment further provides a router 500 that serves as a leaf node of a bidirectional P2MP LSP. As shown in FIG. 6, the router 500 includes a receiving unit 501 and a sending unit 502, where:

the receiving unit 501 is configured to receive a Path message from a source node, where the Path message carries an indication of setting up a bidirectional P2MP LSP and a label that is distributed to the leaf node; and the sending unit 502 is configured to send a Resv message to the source node, where the Resv message carries a label distributed to the source node; or

the receiving unit 501 is configured to receive a Path message from a source node, where the Path message carries an indication of setting up a bidirectional P2MP LSP; and the sending unit 502 is configured to send a Resv message to the source node, where the Resv message carries a label distributed to the source node, and a label distributed to the leaf node itself or a leaf label request; and

when the Resv message carries the leaf label request, the receiving unit 501 is further configured to receive from the source node a Resv message that carries a leaf node label.

In another embodiment of the present invention, the receiving unit 402 is further configured to receive an upstream label distribution performance notification message from each leaf node.

The sending unit 502 is further configured to send an upstream label distribution performance notification message to the source node to request the source node to distribute a label.

An embodiment of the present invention provides a system for setting up a bidirectional P2MP LSP, including a source node router 400 and multiple leaf node routers 500.

The source node router 400 is configured to: send a Path message to each leaf node router, and receive a Resv message from each leaf node router, where the Path message carries an indication of setting up a bidirectional P2MP LSP and a label that is distributed to the leaf node, and the Resv message carries a label distributed to the source node; and

the leaf node router 500 is configured to: receive the Path message from the source node router, and send the Resv message to the source node, where the Path message carries the indication of setting up the bidirectional P2MP LSP and the label that is distributed to the leaf node, and the Resv message carries the label distributed to the source node; or

the source node router 400 is configured to: send a Path message to each leaf node router, and receive a Resv message from each leaf node router, where the Path message carries an indication of setting up a bidirectional P2MP LSP, and the Resv message carries a label distributed to the source node, and a label distributed to the leaf node itself or a leaf label request; when the Resv message carries the leaf label request, the source node router is further configured to send a Path message that carries a leaf node label to the leaf node router; and

the leaf node router 500 is configured to: receive the Path message from the source node router, and send the Resv message to the source node, where the Path message carries the indication of setting up the bidirectional P2MP LSP, and the Resv message carries the label distributed to the source node, and the label distributed to the leaf node itself or the leaf label request; when the Resv message carries the leaf label request, the leaf node router is further configured to receive from the source node router a Resv message that carries a leaf node label.

The system provided in this embodiment can implement the methods described in the first embodiment, the second embodiment, and the third embodiment.

Detailed above are the objectives, technical solutions, and benefits of the present invention. Although the invention has been described through some exemplary embodiments, the invention is not limited to such embodiments. It is apparent that those skilled in the art can make modifications, equivalent replacements, and improvements to the present invention without departing from the idea and scope of the present invention. The present invention is intended to cover the modifications, equivalent replacements, and improvements provided that they fall within the scope of protection defined by the following claims or equivalents thereof.

**Claims**

1. A method for setting up a bidirectional point-to-multipoint label switched path, comprising:

    distributing a leaf node label of a leaf-to-source data path and a source node label of a source-to-leaf data path through a Path message and a Resource Reservation message by using a Resource Reservation Protocol-Traffic Engineering protocol to set up a bidirectional point-to-multipoint label switched path.

2. The method according to claim 1, wherein the distributing the leaf node label of the leaf-to-source data path and the source node label of the source-to-leaf data path through the Path message and the Resource Reservation message comprises:

    receiving, by a leaf node, a Path message from a source node, wherein the Path message carries an indication of setting up a bidirectional point-to-multipoint label switched path and a label that is distributed to the leaf node; and

    sending, by the leaf node, a Resource Reservation message to the source node, wherein the Resource Reservation message carries a label distributed to the source node.

3. The method according to claim 1, wherein the distributing the leaf node label of the leaf-to-source data path and the source node label of the source-to-leaf data path through the Path message and the Resource Reservation message comprises:

    receiving, by a leaf node, a Path message from a source node, wherein the Path message carries an indication of setting up a bidirectional point-to-multipoint label switched path; and

    sending, by the leaf node, a Resource Reservation message to the source node, wherein the Resource Reservation message carries a label distributed to the source node, and a label distributed to the leaf node itself or a leaf node label request; wherein

    when the Resource Reservation message carries the leaf node label request, the leaf node further receives from the source node a Resource Reservation message that carries the leaf node label.

4. The method according to claim 3, further comprising:

    performing, by the leaf node, upstream label distribution performance notification to the source node.

**5.** The method according to any one of claims 1 - 4, further comprising:

sending a Pathtear message from one end of the bidirectional point-to-multipoint label switched path to the other end, and at a transmit end and a receive end of the Pathtear message, deleting all or part of labels distributed by the two ends respectively.

**6.** The method according to claim 5, wherein the deleting all or part of the labels distributed by the two ends respectively at the transmit end and the receive end of the Pathtear message comprises:

deleting leaf node labels of all sub-label switched paths if the source node receives the Pathtear message and the previous Path message carries an INTEGRITY object; or deleting a leaf node label of a sub-label switched path corresponding to the leaf node that sends the Pathtear message if the previous Path message carries no INTEGRITY object.

**7.** The method according to any one of claims 1 - 4, further comprising:

sending, by the leaf node, an error notification message to the source node, or receiving, by the leaf node, an error notification message from the source node, wherein the error notification message carries an error state of the bidirectional point-to-multipoint label switched path.

**8.** A router, serving as a source node of a bidirectional point-to-multipoint label switched path, and comprising a sending unit and a receiving unit, wherein:

the sending unit is configured to send a Path message to each leaf node, wherein the Path message carries an indication of setting up a bidirectional point-to-multipoint label switched path and a label distributed that is to the leaf node; and the receiving unit is configured to receive a Resource Reservation message from each leaf node, wherein the Resource Reservation message carries a label distributed to the source node; or the sending unit is configured to send a Path message to each leaf node, wherein the Path message carries an indication of setting up a bidirectional point-to-multipoint label switched path; and the receiving unit is configured to receive a Resource Reservation message from each leaf node, wherein the Resource Reservation message carries a label distributed to the source node, and a label distributed to the leaf node itself or a leaf node label request; and when the Resource Reservation message carries the leaf node label request, the sending unit is further configured to send a Path message that carries a leaf node label to the leaf node.

**9.** A router, serving as a leaf node of a bidirectional point-to-multipoint label switched path, and comprising:

a receiving unit, configured to receive a Path message from a source node, wherein the Path message carries an indication of setting up a bidirectional point-to-multipoint label switched path and a label that is distributed to the leaf node; and a sending unit, configured to send a Resource Reservation message to the source node, wherein the Resource Reservation message carries a label distributed to the source node; or a receiving unit, configured to receive a Path message from a source node, wherein the Path message carries an indication of setting up a bidirectional point-to-multipoint label switched path; and a sending unit, configured to send a Resource Reservation message to the source node, wherein the Resource Reservation message carries a label distributed to the source node, and a label distributed to the leaf node itself or a leaf node label request; wherein when the Resource Reservation message carries the leaf node label request, the receiving unit is further configured to receive from the source node a Resource Reservation message that carries a leaf node label.

**10.** A system for setting up a bidirectional point-to-multipoint label switched path, comprising a source node router and multiple leaf node routers, wherein:

the source node router is configured to: send a Path message to each leaf node router, and receive a Resource Reservation message from each leaf node router, wherein the Path message carries an indication of setting up a bidirectional point-to-multipoint label switched path and a label that is distributed to the leaf node, and the Resource Reservation message carries a label distributed to the source node; and the leaf node router is configured to: receive the Path message from the source node router, and send the Resource Reservation message to the source node, wherein the Path message carries the indication of setting up the bidirectional point-to-multipoint label switched path and the label that is distributed to the leaf node, and the Resource Reservation message carries the label distributed to the source node; or

the source node router is configured to: send a Path message to each leaf node router, and receive a Resource Reservation message from each leaf node router, wherein the Path message carries an indication of setting up a bidirectional point-to-multipoint label switched path, and the Resource Reservation message carries a label distributed to the source node, and a label distributed to the leaf node itself or a leaf node label request; when the Resource Reservation message carries the leaf node label request, the source node router is further configured to send a Path message that carries a leaf node label to the leaf node router; and

the leaf node router is configured to: receive the Path message from the source node router, and send the Resource Reservation message to the source node, wherein the Path message carries the indication of setting up the bidirectional point-to-multipoint label switched path, and the Resource Reservation message carries the label distributed to the source node, and the label distributed to the leaf node itself or the leaf node label request; when the Resource Reservation message carries the leaf node label request, the leaf node router is further configured to receive from the source node router a Resource Reservation message that carries the leaf node label.

P1    L-PE1

S2L  P2MP
LSP

S-PE1

P2

L2S  P2P  L-PE2
LSP

L-PE3

FIG. 1

Source node                    Leaf node

110. Path (bidirectional capability
indication, leaf node label)

120. Resv (source node label)

FIG. 2

Source node

Leaf node

210. Path (bidirectional capability indication)

220. Upstream label distribution performance notification

230. Resv (bidirectional capability indication, source node label, leaf node label)

FIG. 3

Source node

Leaf node

310. Path (bidirectional capability indication)

320. Resv (source node label, <LABEL REQUEST>)

330. Resv (leaf node label)

FIG. 4

401

402

400

Sending unit

Receiving unit

FIG. 5

501    502    500

| Receiving unit | Sending unit |
|---|---|

FIG. 6

# INTERNATIONAL SEARCH REPORT

| | International application No. |
|---|---|
| | PCT/CN2010/070860 |

**A. CLASSIFICATION OF SUBJECT MATTER**

H04L12/56(2006.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CPRS,CNKI,WPI,EPODOC: label, switch, path, LSP, node, bidirectional, reservation, protocol, root, source, leaf, host

**C. DOCUMENTS CONSIDERED TO BE RELEVANT**

| Category* | Citation of document, with indication, where appropriate, of the relevant passages | Relevant to claim No. |
|---|---|---|
| X | CN101106522A(UNIV BEIJING POSTS&TELECOM)16 Jan. 2008(16.01.2008) description page 1 lines 23 - 30 | 1-10 |
| X | CN101155178A(HUAWEI TECHNOLOGIES CO LTD)02 Apr. 2008(02.04.2008) description page 6 line 17 – page 8 line 22 | 1-10 |
| A | CN1859431A(ZHONGXING COMMUNICATION CO LTD SHENZHEN ) 08 Nov. 2006(08.11.2006) the whole document | 1-10 |
| A | CN101150503A(HUAWEI TECHNOLOGIES CO LTD)26 Mar. 2008(26.03.2008) the whole document | 1-10 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 01 Jun. 2010(01.06.2010) | **17 Jun. 2010 (17.06.2010)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer XU Lihong Telephone No. (86-10)62411223 |
|---|---|

Form PCT/ISA /210 (second sheet) (July 2009)

## INTERNATIONAL SEARCH REPORT
Information on patent family members

| International application No. |
| --- |
| PCT/CN2010/070860 |

| Patent Documents referred in the Report | Publication Date | Patent Family | Publication Date |
| --- | --- | --- | --- |
| CN101106522A | 16.01.2008 | none | |
| CN101155178A | 02.04.2008 | WO2008043230A1 | 17.04.2008 |
| CN1859431A | 08.11.2006 | CN100531223C | 19.08.2009 |
| CN101150503A | 26.03.2008 | WO2009052720A1 | 30.04.2009 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200910138582